# FASCICULE DE BREVET EUROPEEN

(11) **EP 1 728 686 B1**
(45) Date de publication et mention de la délivrance du brevet: **15.04.2009**
(21) Numéro de dépôt: 06300482.4
(22) Date de dépôt: 17.05.2006
(51) Int. Cl.: B60R 9/045

(54) **Barres de toit à entraxe réglable**
Dachlastträger mit einstellbarer Querstange
Roofrack with adjustable transverse bars

(30) Priorité: 02.06.2005 FR 0551477
(43) Date de publication de la demande: 06.12.2006
(73) Titulaire: Renault SAS, 92100 Boulogne Billancourt (FR)
(72) Inventeur: Mora, Juan, 75011 Paris (FR)

(56) Documents cités:
- DE-A1- 10 234 558
- US-A- 5 524 803
- US-A1- 2003 080 168
- US-A1- 2004 134 949
- US-B1- 6 286 739

## Description

### DOMAINE TECHNIQUE

L'invention concerne des barres de toit pour véhicule automobile, comprenant deux barres longitudinales adaptées à être fixées sur le pavillon du véhicule et des barres transversales qui sont fixées sur les barres longitudinales par une extrémité articulée.

Elle concerne également un procédé de réglage de la position longitudinale d'une barre transversale dans un dispositif de ce type.

On connaît déjà, notamment du DE 38 14 799 et du FR 2 661 378 des barres de toit pour véhicule automobile du type défini ci-dessus. Elles comportent des barres transversales agencées pour pouvoir se fondre dans le contour de l'une des barres longitudinales et pouvant pivoter à une extrémité articulée par rapport aux barres longitudinales. Cependant, dans les dispositifs de ce type, l'entraxe entre deux barres transversales n'est pas réglable. Cet inconvénient ne permet pas d'adapter la position des barres transversales à des accessoires après vente montés sur les barres de toit transversales tels que des porte-vélo, des porte-ski ou encore un coffre de toit.

La présente invention a pour but d'améliorer de telles barres. Selon l'invention les articulations comportent des moyens d'accouplement avec réglage longitudinal de la position des barres transversales selon la longueur des barres longitudinales, comme décrit dans le document US-A-5,524,803.

Dans un mode de réalisation, l'articulation des barres transversales sur les barres longitudinales comporte un ergot de verrouillage qui peut pénétrer dans un trou de blocage afin de l'immobiliser dans une position donnée selon la longueur des barres longitudinales.

Avantageusement, les barres longitudinales présentent un profil dans lequel un patin est monté coulissant, l'extrémité de la barre transversale comportant l'ergot étant articulé sur ce patin de manière à pouvoir pivoter entre une position levée dans laquelle l'ergot est entièrement sorti du trou de blocage et une position abaissée dans laquelle l'ergot est introduit dans le trou de blocage.

Dans une réalisation particulière l'articulation de la barre transversale sur le patin est une articulation à rotule. Dans ce cas, les trous de blocages sont avantageusement constitués par des encoches formées dans une fente longitudinale des barres longitudinales.

Dans une autre réalisation, les articulations à rotule sont constituées par des charnières.

Selon le procédé de réglage de la position longitudinale d'une barre transversale dans un dispositif de l'invention :
- on lève une extrémité mobile de la barre transversale opposée à son extrémité articulée de manière désaccoupler les moyens d'accouplement avec réglage longitudinal de la position des barres transversales selon la longueur des barres longitudinales ;
- on fait coulisser l'extrémité articulée de la barre transversale dans la barre longitudinale ;
- on abaisse l'extrémité mobile de la barre transversale de manière à réaccoupler lesdits moyens d'accouplement ;
- on bloque l'extrémité mobile de la barre transversale sur une autre barre longitudinale située du côté opposé du pavillon du véhicule.

Selon un mode du procédé de réglage de la position longitudinale d'une barre transversale :
- on lève une extrémité mobile de la barre transversale opposée à son extrémité articulée de manière à faire sortir l'ergot du trou de blocage ;
- on fait coulisser l'extrémité articulée de la barre transversale dans la barre longitudinale ;
- on abaisse l'extrémité mobile de la barre transversale de manière à faire pénétrer l'ergot dans un trou de blocage ;
- on bloque l'extrémité mobile de la barre transversale sur une autre barre longitudinale située du côté opposé du pavillon du véhicule.

Grâce à ces caractéristiques, la position longitudinale d'une barre transversale peut être réglée rapidement sans avoir besoin d'outils. L'extrémité de la barre transversale opposée à l'extrémité articulée comporte avantageusement un dispositif d'attache ou de fixation rapide de type connu dans l'état de la technique et qui ne fait pas partie de l'invention. Ce dispositif d'attache rapide est par exemple un dispositif à blocage par came.

D'autres caractéristiques et avantages de l'invention apparaîtront encore à la lecture de la description qui suit d'exemples de réalisation donné à titre illustratif en référence aux figures annexées. Sur ces figures :
- les figures 1 et 2 sont deux vues en perspective qui illustrent l'état de la technique antérieur ;
- la figure 3 est une vue en perspective similaire aux figures 1 et 2 mais qui représente des barres de toit conforme à l'invention ;
- les figures 4, 5 et 6 sont des vues de détail qui illustrent le fonctionnement du dispositif représenté sur la figure 3 ;
- la figure 7 est une vue de détail d'un autre mode de réalisation d'une articulation conforme à la présente invention.

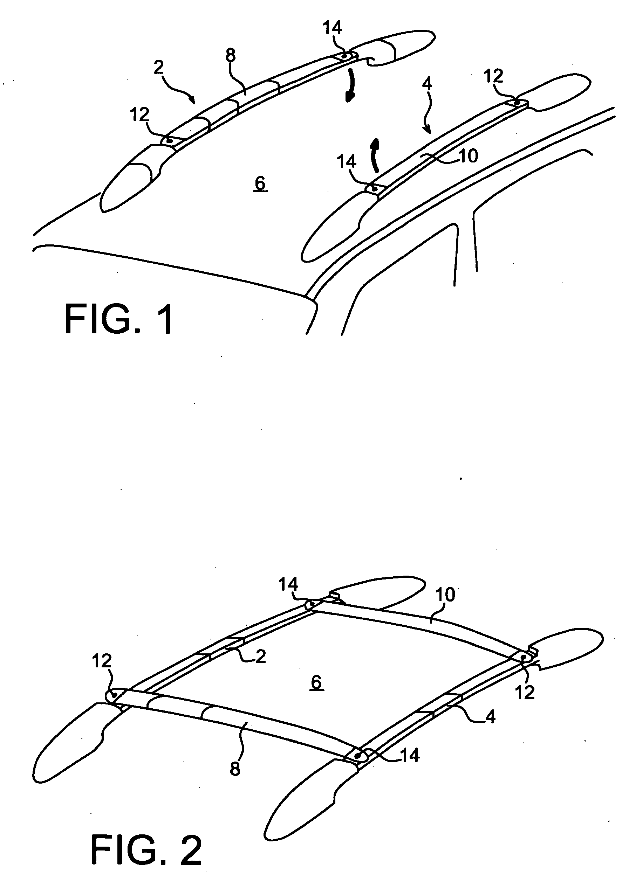

Sur les figures 1 et 2, qui illustrent l'art antérieur, les barres de toit multifonction comprennent deux barres longitudinales latérales 2 et 4 qui sont fixées à demeure sur le pavillon 6 d'un véhicule automobile et des barres transversales, par exemple au nombre de deux dans l'exemple représenté. Chacune des barres transversales 8 et 10 comporte une extrémité articulée 12 et une extrémité mobile 14. L'extrémité mobile de chaque barres transversales 8 ou 10 peut être désolidarisée de la barre longitudinale 2 ou 4 sur laquelle elle est fixée dans la position de la figure 1 de manière à faire pivoter la barre transversale d'un quart de tour pour aboutir à la position représentée sur la figure 2. Comme on le constate, dans une réalisation de ce type, l'entraxe des barres transversales 8 et 10 est déterminé par l'écartement des articulations 12 des barres transversales. Cet entraxe n'est donc pas réglable. On entend par entraxe la distance ou l'écartement entre deux barres 8 et 10 lorsqu'elle sont positionnées transversalement par rapport aux barres longitudinales 2 et 4.

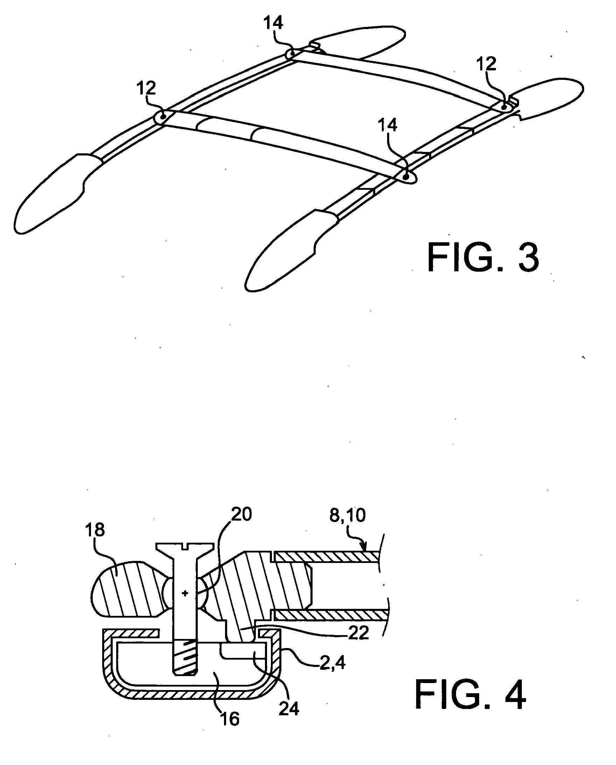

On a représenté sur la figure 3 un dispositif de barres de toit multifonction conforme à l'invention dans lequel la position des articulations 12 est réglable. Les extrémités mobiles 14 peuvent être fixées en une position quelconque selon la longueur des barres longitudinales 2 et 4. De la sorte l'entraxe des barres transversales 8 et 10 peut être modifié à volonté comme on peut le voir sur la figure 3.

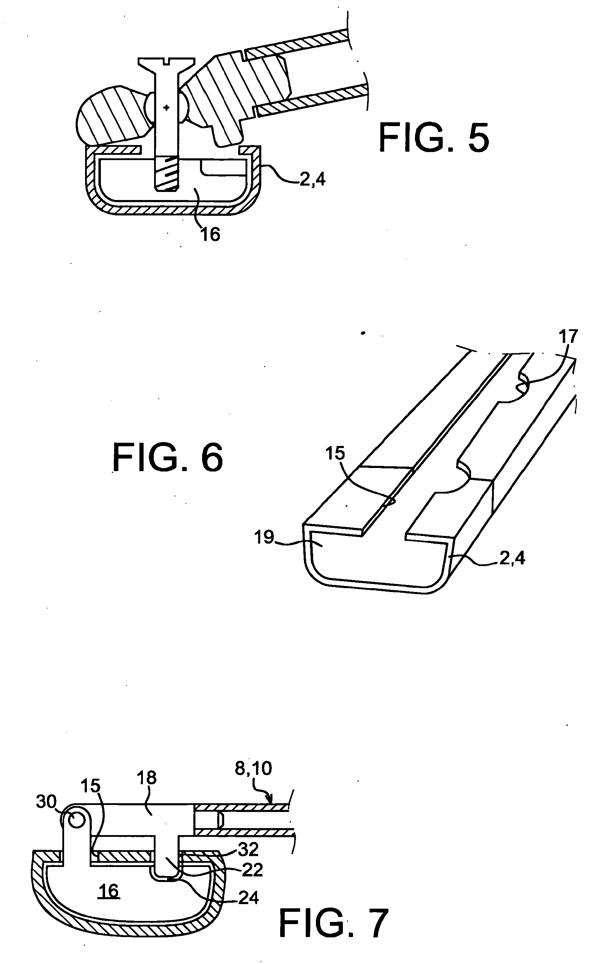

On a représenté sur les figures 4 à 6 un exemple de réalisation du mécanisme permettant le réglage longitudinal de l'articulation 12 d'une barre transversale sur une barre longitudinale. Dans l'exemple, chacune des barres longitudinales 2 et 4 est constituée par un profilé creux comportant sensiblement sur toute sa longueur une fente 15 sur un bord duquel sont prévues des encoches 17. Un patin 16 est emprisonné dans le volume intérieur 19 du profilé creux 2,4. Le patin 16 peut coulisser selon la longueur de la barre longitudinale 2,4. A son extrémité articulée, chacune des barres transversales 8 et 10 comporte une tête 18 qui est montée sur le patin 16 par l'intermédiaire d'une articulation, par exemple une articulation à rotule 20. Chacune des barres transversales 8, 10 peut pivoter autour de l'articulation 20 entre une position abaissée (figure 4) dans laquelle un ergot 22 pénètre dans une encoche 17. Avantageusement, il est possible de prévoir un évidement 24 en dessous de l'ergot 22 de manière à ménager un jeu pour l'introduction de l'ergot dans la fente 17. Dans cette position abaissée, l'extrémité de la barre transversale 8, 10 est bloquée selon la longueur de la barre longitudinale par l'ergot 22 coopérant avec l'encoche 17. Cette encoche 17 constitue un trou de blocage au sens de la présente invention. Au contraire, sur la position représentée sur la figure 5, appelée position levée, l'extrémité libre de la barre transversale 8, 10 est relevée de manière à faire sortir l'ergot 22 de l'encoche 17 de manière que le patin 16 puisse coulisser librement selon la longueur de la barre longitudinale. L'autre extrémité de chacune des barres transversales 8, 10 (non représentée) comporte un mécanisme de fixation rapide qui permet de la fixer sur la barre longitudinale située de l'autre côté du véhicule. Ce mécanisme de fixation rapide permet de régler la position de l'extrémité libre en un point quelconque, et sans avoir besoin de recourir à un outillage. Un tel dispositif, connu dans l'état de la technique, ne fait pas partie de l'invention. En conséquence il ne sera pas décrit plus précisément.

Le réglage de la position longitudinale des barres transversales s'effectue ainsi de la manière suivante. A partir d'une position, telle qu'une position représentée sur la figure 2, dans laquelle les barres transversales 8 et 10 comportent un écartement non souhaité, on commence par libérer l'extrémité mobile 14 d'une première barre transversale, par exemple la barre transversale 8, en ouvrant l'attache rapide. On soulève ensuite cette barre pour l'amener dans la position levée représentée sur la figure 5 dans laquelle l'ergot 22 sort de l'encoche 17. On l'amène dans la position longitudinale voulue correspondant à une encoche 17. Le pas d'espacement des encoches 17 est choisi suffisamment faible pour qu'il soit possible de régler la position des barres de manière précise. On abaisse ensuite l'extrémité libre 14 de manière à faire pénétrer l'ergot dans une nouvelle encoche 17 et amener la barre dans la position représentée sur la figure 4. On referme alors l'attache rapide. Dans cette position, la barre est immobilisée à ses deux extrémités.

Le fait de ne prévoir une attache rapide qu'à l'une des extrémités de la barre garantit son inviolabilité. En d'autres termes, l'extrémité articulée ne peut pas être démontée, ce qui empêche que la barre puisse être volée.

On a représenté sur la figure 7 une variante de réalisation de l'articulation des figures 4 à 6. Dans cette variante de réalisation, la tête 18 de chacune des barres transversales 8 et 10 est articulée sur le patin 16 par une articulation à charnière 30. La fente longitudinale 15 de chacune des barres longitudinales 2 et 4 ne comporte pas d'encoches 17 comme dans le mode de réalisation précédemment décrit. Des trous de blocage 32 séparés de la fente 15 sont formés dans la face supérieure des barres longitudinales 2 et 4. Le fonctionnement de ce mode de réalisation est identique à celui du mode de réalisation précédent.

Il est à remarquer que le mécanisme de fixation des barres selon l'invention n'est pas destiné à permettre la rotation d'un quart de tour des barres transversales.

## Revendications

1. Barres de toit pour véhicule automobile comprenant deux barres longitudinales (2, 4) adaptées à être fixées sur le pavillon (6) du véhicule et des barres transversales (8, 10) fixées sur les barres longitudinales (2, 4) par des articulations (20, 30) à une extrémité articulée (12), les articulations comportant des moyens d'accouplement avec réglage longitudinal de la position des barres transversales (8, 10) selon la longueur des barres longitudinales (2, 4),
**caractérisées en ce que** chaque articulation d'une barre transversale sur une barre longitudinale comporte un ergot de verrouillage (22) qui, dans une position abaissée de la barre transversale, pénétre dans un trou de blocage (17, 32) formé dans la barre longitudinale afin de l'immobiliser dans une position donnée selon la longueur de la barre longitudinale (2, 4) et qui, dans une position levée de la barre longitudinale, quitte le trou de blocage (17, 32) afin de permettre le réglage longitudinal de la position de la barre transversale (8, 10) selon la longueur de la barre longitudinale (24).

2. Barres de toit selon la revendication 1, **caractérisées en ce que** les barres longitudinales (2, 4) présentent un profil dans lequel un patin (16) est monté coulissant, l'extrémité (12) de la barre transversale (8, 10) comportant l'ergot étant articulée sur ce patin (16) de manière à pouvoir pivoter entre la position levée dans laquelle l'ergot (22) est entièrement sorti du trou de blocage (17, 32) et la position abaissée dans laquelle l'ergot (22) est introduit dans le trou de blocage.

3. Barres de toit selon la revendication 2, **caractérisées en ce que** l'articulation est une articulation à rotule (20).

4. Barres de toit selon la revendication 3, **caractérisées en ce que** les trous de blocage sont des encoches (17) formés dans une fente (15) des barres longitudinales.

5. Barres de toit selon la revendication 2, **caractérisées en ce que** l'articulation est une articulation à charnière (30).

6. Procédé de réglage de la position longitudinale d'une barre transversale (8, 10) dans un dispositif selon l'une des revendications 1 à 5, **caractérisé en ce que** :
- on lève une extrémité mobile (12) de la barre transversale (8, 10) de manière à désaccoupler les moyens d'accouplement avec réglage longitudinal de la position des barres transversales (8, 10) selon la longueur des barres longitudinales (2, 4) ;
- on fait coulisser l'extrémité articulée de la barre transversale dans la barre longitudinale ;
- on abaisse l'extrémité mobile de la barre transversale de manière à réaccoupler lesdits moyens d'accouplement ;
- on bloque l'extrémité mobile (12) de la barre transversale sur une autre barre longitudinale.

7. Procédé de réglage de la position longitudinale d'une barre transversale (8, 10) dans un dispositif selon l'une des revendications 1 à 5, **caractérisé en ce que** :
- on lève une extrémité mobile (12) de la barre transversale (8, 10) de manière à faire sortir l'ergot (22) du trou de blocage (17, 32) ;
- on fait coulisser l'extrémité articulée de la barre transversale dans la barre longitudinale ;
- on abaisse l'extrémité mobile de la barre transversale de manière à faire pénétrer l'ergot dans le trou de blocage ;
- on bloque l'extrémité mobile (12) de la barre transversale sur une autre barre longitudinale.

8. Véhicule **caractérisé en ce qu'**il comporte des barres de toit selon l'une quelconque des revendications 1 à 5, les barres longitudinales (2, 4) étant fixées sur le pavillon (6).

## Claims

1. Roof bars for a motor vehicle comprising two longitudinal bars (2, 4) suitable for being attached to the roof (6) of the vehicle and transverse bars (8, 10) attached to the longitudinal bars (2, 4) by articulations (20, 30) at an articulated end (12), the articulations comprising coupling means with longitudinal adjustment of the position of the transverse bars (8, 10) along the length of the longitudinal bars (2, 4),
**characterized in that** each articulation of a transverse bar on a longitudinal bar comprises a locking lug (22) which, in a lowered position of the transverse bar, enters a locking hole (17, 32) formed in the longitudinal bar in order to immobilize it in a given position along the length of the longitudinal bar (2, 4) and which, in a raised position of the longitudinal bar, comes out of the locking hole (17, 32) in order to allow the longitudinal adjustment of the position of the transverse bar (8, 10) along the length of the longitudinal bar (24).

2. Roof bars according to Claim 1, **characterized in that** the longitudinal bars (2, 4) have a profile in which a skid (16) is mounted slidingly, the end (12) of the transverse bar (8, 10) comprising the lug being articulated on this skid (16) so as to be able to pivot between the raised position in which the lug (22) is fully out of the locking hole (17, 32) and the lowered position in which the lug (22) is inserted into the locking hole.

3. Roof bars according to Claim 2, **characterized in that** the articulation is a swivel joint articulation (20).

4. Roof bars according to Claim 3, **characterized in that** the locking holes are notches (17) formed in a slot (15) in the longitudinal bars.

5. Roof bars according to Claim 2, **characterized in that** the articulation is a hinged articulation (30).

6. Method of adjusting the longitudinal position of a transverse bar (8, 10) in a device according to one of Claims 1 to 5, **characterized in that**:
- a mobile end (12) of the transverse bar (8, 10) is raised so as to uncouple the coupling means with longitudinal adjustment of the position of the transverse bars (8, 10) along the length of the longitudinal bars (2, 4);
- the articulated end of the transverse bar is slid in the longitudinal bar;
- the mobile end of the transverse bar is lowered so as to recouple the said coupling means;
- the mobile end (12) of the transverse bar is locked onto another longitudinal bar.

7. Method for adjusting the longitudinal position of a transverse bar (8, 10) in a device according to one of Claims 1 to 5, **characterized in that**:
- a mobile end (12) of the transverse bar (8, 10) is raised so as to remove the lug (22) from the locking hole (17, 32);
- the articulated end of the transverse bar is slid in the longitudinal bar;
- the mobile end of the transverse bar is lowered so as to insert the lug into the locking hole;
- the mobile end (12) of the transverse bar is locked onto another longitudinal bar.

8. Vehicle **characterized in that** it comprises roof bars according to any one of Claims 1 to 5, the longitudinal bars (2, 4) being attached to the roof (6).

## Patentansprüche

1. Dachträger für Kraftfahrzeug, mit zwei Längsstäben (2, 4), die dazu ausgelegt sind, am Karosseriedach (6) des Fahrzeugs befestigt zu werden, und Querstäben (8, 10), die an einem angelenkten Ende (12) an den Längsstäben (2, 4) durch Gelenke (20, 30) befestigt sind, wobei die Gelenke Kopplungsmittel mit longitudinaler Einstellung der Position der Querstäbe (8, 10) in Richtung der Länge der Längsstäbe (2, 4) enthalten,
**dadurch gekennzeichnet, dass** jedes Gelenk eines Querstabs an einem Längsstab einen Verriegelungsvorsprung (22) aufweist, der in einer abgesenkten Position des Querstabs in ein in dem Längsstab ausgebildetes Blockierloch (17, 32) eindringt, um ihn in einer gegebenen Position in Richtung der Länge des Längsstabs (2, 4) unbeweglich zu machen, und der in einer angehobenen Position des Längsstabs das Blockierloch (17, 32) verlässt, um die longitudinale Einstellung der Position des Querstabs (8, 10) in Richtung der Länge des Längsstabs (24) zu ermöglichen.

2. Dachträger nach Anspruch 1, **dadurch gekennzeichnet, dass** die Längsstäbe (2, 4) ein Profil aufweisen, in dem ein Gleitschuh (16) gleitend angebracht ist, wobei das den Ansatz aufweisende Ende (12) des Querstabs (8, 10) an diesem Gleitschuh (16) in der Weise angelenkt ist, dass es zwischen der angehobenen Position, in der der Ansatz (22) das Blockierloch (17, 32) vollständig verlassen hat, und der abgesenkten Position, in der der Ansatz (22) in das Blockierloch eingeführt ist, schwenken kann.

3. Dachträger nach Anspruch 2, **dadurch gekennzeichnet, dass** das Gelenk ein Kugelgelenk (20) ist.

4. Dachträger nach Anspruch 3, **dadurch gekennzeichnet, dass** die Blockierlöcher Aussparungen (17) sind, die in einem Schlitz (15) der Längsstäbe ausgebildet sind.

5. Dachträger nach Anspruch 2, **dadurch gekennzeichnet, dass** das Gelenk ein Scharniergelenk (30) ist.

6. Verfahren zum Einstellen der longitudinalen Position eines Querstabs (8, 10) in einer Vorrichtung nach einem der Ansprüche 1 bis 5, **dadurch gekennzeichnet, dass**:
- ein bewegliches Ende (12) des Querstabs (8, 10) angehoben wird, derart, dass die Kopplungsmittel mit longitudinaler Einstellung der Position der Querstäbe (8, 10) in Richtung der Länge der Längsstäbe (2, 4) entkoppelt werden;
- das angelenkte Ende des Querstabs in dem Längsstab gleitend verschoben wird;
- das bewegliche Ende des Querstabs abgesenkt wird, derart, dass die Kopplungsmittel wieder gekoppelt werden;
- das bewegliche Ende (12) des Querstabs an einem anderen Längsstab blockiert wird.

7. Verfahren zum Einstellen der longitudinalen Position eines Querstabs (8, 10) in einer Vorrichtung nach einem der Ansprüche 1 bis 5, **dadurch gekennzeichnet, dass**:
- ein bewegliches Ende (12) des Querstabs (8, 10) angehoben wird, derart, dass der Ansatz (22) das Blockierloch (17, 32) verlässt;
- das angelenkte Ende des Querstabs in dem Längsstab gleitend verschoben wird;
- das bewegliche Ende des Querstabs abgesenkt wird, derart, dass der Ansatz in das Blockierloch eindringt;
- das bewegliche Ende (12) des Querstabs an einem anderen Längsstab blockiert wird.

8. Fahrzeug, **dadurch gekennzeichnet, dass** es einen Dachträger nach einem der Ansprüche 1 bis 5 aufweist, wobei die Längsstäbe (2, 4) an dem Karosseriedach (6) befestigt sind.
